# EUROPEAN PATENT SPECIFICATION

(11) **EP 3 024 297 B1**
(45) Date of publication and mention of the grant of the patent: **14.10.2020**
(21) Application number: 13889270.8
(22) Date of filing: 12.07.2013
(51) Int. Cl.: H01P 5/22, H01Q 3/40, H04Q 3/42, H01P 1/18

(54) **3X3 BUTLER MATRIX AND 5X6 BUTLER MATRIX**
3X3-BUTLERMATRIX UND 5X6-BUTLERMATRIX
MATRICE DE BUTLER 3×3 ET MATRICE DE BUTLER 5×6

(43) Date of publication of application: 25.05.2016
(73) Proprietor: Guangdong Broadradio Communication Technology Co. Ltd., Guangzhou, Guangdong 510700 (CN)
(72) Inventor: WU, Biqun, Guangzhou Guangdong 510700 (CN)
(74) Representative: Zaboliene, Reda
(86) International application number: PCT/CN2013/079274
(87) International publication number: WO 2015/003381

(56) References cited:
- CN-A- 101 599 784
- CN-A- 102 195 696
- CN-A- 103 022 700
- CN-A- 103 414 022
- CN-U- 203 386 900
- KR-B1- 100 760 295
- US-A- 4 231 040
- US-A- 4 633 259
- US-A- 5 812 088
- US-A1- 2013 076 565
- PAUL SHELTON: "Multibeam, hexagonal, triangular-grid, planar arrays", ANTENNAS AND PROPAGATION SOCIETY INTERNATIONAL SYMPOSIUM, 1 September 1965 (1965-09-01), XP055363542,
- PIOVANO B ET AL: "Design And Breadboarding Of Wideband Nxn Butler Matrices For Multiport Amplifiers", 19930802; 19930802 - 19930805, vol. 1, 2 August 1993 (1993-08-02), pages 175-180, XP010224184,

## Description

### FIELD OF THE INVENTION

The present invention relates to the technical field of microwave passive components, and particularly to 5×6 Butler matrix used for beam forming network.

### BACKGROUND OF THE INVENTION

With the fast development of mobile communication technology and rapid increase of mobile communication business, problems of strong signal interference within communication zone, insufficient spectrum capacity and signal cover are faced. Multi-wave beam antennas may simultaneously generate directional pattern performances of multi wave beams and may increase network capacity. In addition, the multi-wave beam antennas are useful to obtain narrow wave beam and high gain and may decrease signal interference and increase covering distance. Therefore, the multi-wave beam antennas have broad application prospects and great value.

Butler matrix is an important part of the multi-wave beam antennas and is a key component for generating multi-wave beam characteristic. However, the Butler in the prior art is of large size, narrow frequency band and higher loss and is to be improved.

The following Prior Art article PIOVANO B ET AL: "Design and Breadboarding of Wideband Nxn Butler Matrices For Multiport Amplifiers", 2 August 1993, XP010224184 discloses two different types of wideband Butler metrices in WR75 waveguide however it differs from this invention by structures of shifters indicated in Claim 1 of this invention.

### SUMMARY OF THE INVENTION

The object of the invention is to provide 5×6 Butler matrix of small size, broad frequency band, high isolation and stable performance aiming at lacks in the prior art.

The invention is provided in new claim 1.

A 3×3 Butler matrix includes a first directional coupler, a second directional coupler, a third directional coupler, a first fixed phase shifter, a second fixed phase shifter and a third fixed phase shifter, wherein each directional coupler has two input ends and two output ends, respectively a first input end, a second input end, a first output end and a second output end.
the 3 ×3 Butler matrix has three input ports and three output ports, respectively a first input port, a second input port, a third input port, a first output port, a second output port and a third output port. The second input end of the second directional coupler is connected to the first input port, the second input end of the first directional coupler is connected to the second input port, the first input end of the first directional coupler is connected to the third input port, the first output end of the first directional coupler is connected to the first input end of the third directional coupler via the first fixed phase shifter, the second output end of the first directional coupler is connected with the first input end of the second directional coupler, the first output end of the second directional coupler is connected with the second input end of the third directional coupler, the second output end of the second directional coupler is connected to the first output port via the third fixed phase shifter, the second output end of the third directional coupler is connected to the second output port via the second fixed phase shifter, the first output end of the third directional coupler is connected to the third output port.

The transfer phase of the first fixed phase shifter is delayed 90 degrees with respect to that from the first input end to the first output end of the second directional coupler, the transfer phase of the second fixed phase shifter is delayed 90 degrees with respect to that from the first output end of the third directional coupler to the third output port, and the transfer phase of the third fixed phase shifter is delayed 90 degrees with respect to that from the first output end of the second directional coupler to the second output port.

Further, the first input ends and the first output ends of the first to third directional coupler are distributed at the same sides, and the second input ends and the second output ends are distributed at the same sides.

The first directional coupler and the third directional coupler are directional coupler with equal power division having 90 degrees phase shift characteristic. The powers allocated to the two ends thereof are equal and respectively half the power of the input signal.

The second directional coupler is a directional coupler with unequal power division having 90 degrees phase shift characteristic. The powers allocated to the two ends thereof are respectively one third and two thirds of the power of the input signal.

When any input ends of the first, the second or the third directional coupler are fed, the transfer phase of the output end thereof at the opposite side is delayed 90 degrees with respect to that of the other output end of the same side.

Further, the first to third directional couplers and the first to third fixed phase shifters are micro-strip or strip-line structure.

Further, the first to third directional couplers are branch-line couplers or coupled-line couplers.

Further, the structures of the first to third fixed phase shifters include two λ/4 transmission lines connected in series and of the same impedance and a λ/4 short-circuit transmission line or λ/2 open-circuit transmission line connected at the middle point of these two transmission lines, and λ is center frequency of working frequency of the fixed phase shifter.

A 5×6 Butler matrix includes a first 3×3 Butler matrix, a second 3×3 Butler matrix, a fourth directional coupler, a fifth directional coupler, a power divider, a fourth fixed phase shifter and a fifth fixed phase shifter, wherein each directional coupler has two input ends and two output ends, respectively a first input end, a second input end, a first output end and the second output end, the power divider has an input end, a first output end and a second output end.

The 5×6 Butler matrix has five input ports and six output ports, respectively the first to fifth input ports and the first to sixth output ports.

The input end of the power divider is connected to the first input port of the 5×6 Butler matrix, the second output end of the power divider is connected to the first input end of the second 3×3 Butler matrix, the first output end of the power divider is connected to the first input end of the first 3×3 Butler matrix, the second input end of the fifth directional coupler is connected to the second input port of the 5×6 Butler matrix, the first input end is connected to the third input port of the 5×6 Butler matrix, the second output end is connected to the second input end of the second 3×3 Butler matrix, the first output end is connected to the second input end of the first 3×3 Butler matrix via the fifth fixed phase shifter, the second input end of the fourth directional coupler is connected to the fourth input port of the 5×6 Butler matrix, the first input end is connected to the fifth input port of the 5×6 Butler matrix, the second output end is connected to the third input end of the second 3×3 Butler matrix, the first output end is connected to the third input end of the first 3×3 Butler matrix via the fourth fixed phase shifter, the first output end, the second output end and the third output end of the second 3×3 Butler matrix are respectively connected to the first output port, the fifth output port and the third output port of the 5×6 Butler matrix, the first output end, the second output end and the third output end of the first 3×3 Butler matrix are respectively connected to the second output port, the sixth output port and the fourth output port of the 5×6 Butler matrix.

The fourth fixed phase shifter is a 30° advanced phase shifter, and the fifth fixed phase shifter is a 150° advanced phase shifter.

Further, the first input ends and the first output ends of the fourth directional coupler and the fifth directional coupler are distributed at same sides, and the second input ends and the second output ends are distributed at the same sides.

The fourth directional coupler and the fifth directional coupler are both directional couplers with equal power division having degrees phase shift characteristic, the powers allocated to the two output ends thereof are equal and respectively half the power of the input signal.

When any input end of the fourth or fifth directional coupler is fed, the transfer phase of the output end thereof at the opposite side is delayed 90 degrees with respect to that of the other output end of the same side.

Further, the fourth directional coupler and the fifth directional coupler are branch-line couplers or coupled-line couplers.

Further, the power divider is an equipower and equiphase power divider.

Three antenna arrays may be connected to the output ports of the 3×3 Butler matrix for generating three beams of different orientation at the three input ports. Five antenna arrays may be connected to the output ports of the 5×6 Butler matrix provided by the present invention for generating five beams of different orientation at the five input ports. The 5×6 Butler matrix provided in the present invention and the non-claimed example of the 3x3 Butler matrix have the features of small size, wide frequency band, low loss, high isolation and stable performance, fill the blank of specific technical schemes about the 5×6 Butler matrix in the prior art, and have broad application prospects and great value.

### BRIEF DESCRIPTION OF THE DRAWINGS

Figure 1 is a topology view of an example not forming part of the invention;
Figure 2 is a schematic view of a micro-strip structure of
Figure 3 is a structural schematic view of a second fixed phase shifter i
Figure 4 is a simulation result chart of S parameter of the example of Fig. 1;
Figure 5 is a parameter list of the simulation result of Figure 4;
Figure 6 is a topology view of embodiment of the invention;
Figure 7 is a schematic view of a part of micro-strip structure of
Figure 8 is a structural schematic view of a fourth fixed phase shifter in Figure 7;
Figure 9 is a simulation result chart of S parameter of an embodiment of the invention;
Figures 10 and 11 are parameter lists of the simulation result of Figure 9.

### DETAILED DESCRIPTION OF THE INVENTION

Technical solutions of the present invention will be illustrated in detail in conjunction with accompanying drawings and embodiments.

### Example One

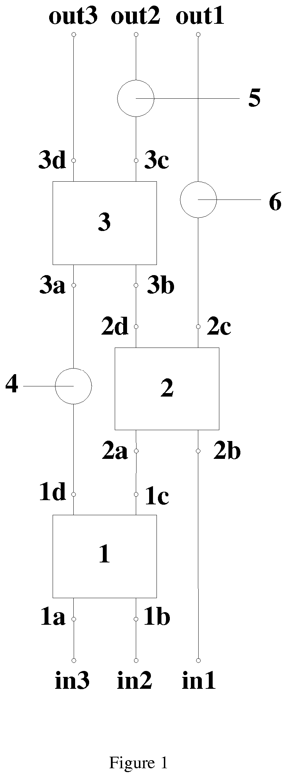

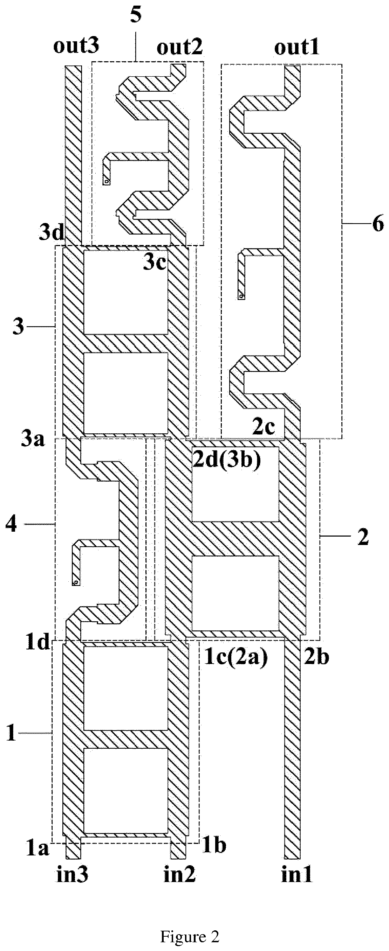

Reference is made to Figures 1 and 2. A 3×3 Butler matrix comprises a first directional coupler 1, a second directional coupler 2, a third directional coupler 3, a first fixed phase shifter 4, a second fixed phase shifter 5 and a third fixed phase shifter 6. Each directional coupler has two input ends and two output ends, respectively a first input end, a second input end, a first output end and a second output end. The 3×3 Butler matrix has three signal input ports, respectively a first input port in1, a second input port in2 and a third input port in3, and has three output ports, respectively a first output port out1, a second output port out2 and a third output port out3.

The connecting relationship of respective components is shown in Figure 1. The second input end 2b of the second directional coupler 2 is connected to the first input port in1. The second input end 1b of the first directional coupler 1 is connected to the second input port in2. The first input end 1a of the first directional coupler 1 is connected to the third input port in3. The first output end 1d of the first directional coupler 1 is connected to the first input end 3a of the third directional coupler 3 via the first fixed phase shifter 4. The second output end 1c of the first directional coupler 1 is connected with the first input end 2a of the second directional coupler 2. The first output end 2d of the second directional coupler 2 is connected with the second input end 3b of the third directional coupler 3. The second output end 2c of the second directional coupler 2 is connected to the first output port out1 via the third fixed phase shifter 6. The second output end 3c of the third directional coupler 3 is connected to the second output port out2 via the second fixed phase shifter 5. The first output end 3d of the third directional coupler 3 is connected to the third output port out3.

The first to third directional couplers and the first to third fixed phase shifters each may be implemented by employing a micro-strip or strip-line structure. The first to third directional couplers and the first to third fixed phase shifters each is implemented by employing a micro-strip structure.

The first to third directional couplers are branch-line couplers or coupled-line couplers. Referring to Figure 2, the first to third directional couplers are all implemented by second order branch line coupler structure. The first input ends and the first output ends of the first to third directional couplers are distributed at the same sides and the second input ends and the second output ends are distributed at the same sides. The first to third directional couplers have 90 degrees phase shift characteristics, that is, when any input ends of the first, the second or the third directional coupler are fed, the transfer phase of the output end thereof at the opposite side is delayed by 90 degrees with respect to that of the other output end of the same side.

Particularly, the first directional coupler 1 is a directional coupler with equal power division having 90 degrees phase shift characteristic. When a signal is fed from the first input end 1a of the first directional coupler 1, the power allocated to the first output end 1d is equal to the power allocated to the second output end 1c, i.e. half the power of the input signal, and the output phase of the second output end 1c is delayed 90 degrees with respect to that of the first output end 1d. Similarly,

When a signal is fed from the second input end 1b of the first directional coupler 1, the power allocated to the first output end Id is equal to the power allocated to the second output end 1c, i.e. half the power of the input signal, and the output phase of the first output end 1d is delayed 90 degrees with respect to that of the second output end 1c.

The second directional coupler 2 is a directional coupler with unequal power division having 90 degrees phase shift characteristic. When a signal is fed from the first input end 2a of the second directional coupler 2, the power allocated to the first output end 2d is half the power allocated to the second output end 2c, i.e., the power allocated to the first output end 2d is one third of the power of the input signal, the power allocated to the second output end 2c is two thirds of the power of the input signal and the output phase of the second output end 2c is delayed 90 degrees with respect to that of the first output end 2d. Similarly, When a signal is fed from the second input end 2b of the second directional coupler 2, the power allocated to the second output end 2c is half the power allocated to the first output end 2d, i.e., the power allocated to the second output end 2c is one third of the power of the input signal, the power allocated to the first output end 2d is two thirds of the power of the input signal and the output phase of the first output end 2d is delayed 90 degrees with respect to that of the second output end 2c.

The third directional coupler 3 is a directional coupler with equal power division having 90 degrees phase shift characteristic. When a signal is fed from the first input end 3a of the third directional coupler 3, the power allocated to the first output end 3d is equal to the power allocated to the second output end 3c, i.e. half the power of the input signal, and the output phase of the second output end 3c is delayed 90 degrees with respect to that of the first output end 3d. Similarly, When a signal is fed from the second input end 3b of the third directional coupler 3, the power allocated to the first output end 3d is equal to the power allocated to the second output end 3c, i.e. half the power of the input signal, and the output phase of the first output end 3d is delayed 90 degrees with respect to that of the second output end 3c.

Further, the first fixed phase shifter 4 is located between the first output end 1d of the first directional coupler 1 and the first input end 3a of the third directional coupler 3, and the transfer phase of the first fixed phase shifter 4 is delayed 90 degrees with respect to that from the first input end 2a of the second directional coupler 2 to the first output end 2d. The second fixed phase shifter 5 is located between the second output end 3c of the third directional coupler 3 and the second output port out2, and is a 90 degrees-delay phase shifter, that is, the transfer phase of the second fixed phase shifter 5 is delayed 90 degrees with respect to that from the first output end 3d of the third directional coupler 3 to the third output port out3. The third fixed phase shifter 6 is located between the second output end 2c of the second directional coupler 2 and the first output port out1, and the transfer phase of the third fixed phase shifter 6 is delayed 90 degrees with respect to that from the first output end 2d of the second directional coupler 2 to the second output port out2.

In order that wideband property of phase shifter is obtained, the first to third fixed phase shifters are of short circuit load stub structures of quarter-wave. The structures of the first to third fixed phase shifters include two λ/4 transmission lines interconnected in series and of the same impedance and a λ/4 short-circuited transmission line connected at the middle point of these two transmission lines in parallel with them.

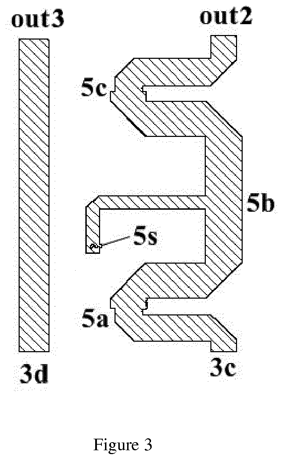

Since the structures of the first to third fixed phase shifters are similar and principles of them are same, the second fixed phase shifter 5 is herein just taken as an example. Referring to figure 3, the structure and principle of the second fixed phase shifter 5 are analyzed. The second fixed phase shifter 5 is composed of five transmission lines including 3c-5a, 5a-5b, 5b-5c,5c-out2 transmission lines sequently connected and 5b-5s transmission line connected to the middle point of 3c-out2, wherein 3c-5a and 5c-out2 transmission lines are 50 ohm transmission lines, 5a-5b and 5b-5c transmission lines are of the same line width (impedance) and the same electrical length, both are λ/4 (λ is center frequency of working frequency of the fixed phase shifter), and 5b-5s is λ/4 short-circuited transmission line parallel connected and the terminal thereof is short circuited with floor (not shown) via a conductive hole 5s. Firstly, the transfer phase of 3c-out2 transmission line in the center frequency is delayed 90° with respect to that of 3d-out3 transmission line by adjusting line length of 3c-5a or 5c-out2, and then the delay value of the transfer phase of 3c-out2 in the center frequency with respect to that of 3d-out3 is adjusted by adjusting the width (impedance) of 5a-5c and 5b-5s transmission lines. The transfer phase of 3c-out2 transmission line within the whole working frequency is delayed 90° with respect to that of 3d-out3 transmission line with the error within ±2° by selecting suitable line width (impedance), thus realizing broadband design of phase shifter.

The working principle is as follows:
If radio-frequency signal is input from the first input port in1, the signal is firstly passed through the second directional coupler 2 and then is divided into two outputs after being passed the second direction coupler 2. The signal of the first output end 2d of the second directional coupler 2 is 2/3<-90°, and the signal of the second output end 2c is 1/3 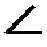 0°, wherein the signal 2/3 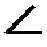 -90°is passed to the third directional coupler 3, and the signal 1/3 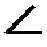 0° is passed to the third fixed phase shifter 6. After the signal 2/3 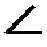 -90° is passed through the third directional coupler 3, the signals of the first output end 3d and the second output end 3c of the third directional coupler 3 are respectively 1/3 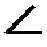 -180° and 1/3 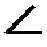 -90°and the output signal of the third output port out3 is 1/3 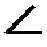 -180°. After the signal 1/3 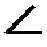 -90° is passed through the second fixed phase shifter 5, the output signal of the second output port out2 is 1/3 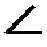 -180°. After the signal 1/3 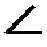 0° of the second output end 2c of the second directional coupler 2 is passed through the third fixed phase shifter 6, the output signal of the first output port out1 is 1/3 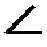 -180°. Therefore, if the signal is input from the first input port inl, the signals of the first output port out1, the second output port out2 and the third output port out3 are respectively 1/3 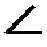 -180°, 1/3 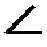 -180° and 1/3 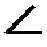 -180°, that is, when the first input port in 1 is fed, the amplitudes and phases of the signals of the first to third output ports are equal.

If radio-frequency signal is input from the second input port in2, the signal is firstly passed through the first directional coupler 1 and then is divided into two outputs after being passed the first direction coupler 1. The signal of the first output end Id of the first directional coupler 1 is 1/2 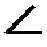 -90°, and the signal of the second output end 1c is 1/2 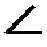 0°, wherein the signal 1/2 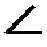 0° is passed to the second directional coupler 2, and the signal 1/2 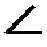 -90° is passed to the first fixed phase shifter 4. After the signal 1/2 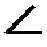 0° is passed through the second directional coupler 2, the signals of the first output end 2d and the second output end 2c of the second directional coupler 2 are respectively 1/6 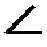 0° and 1/3 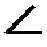 -90°, wherein the signal 1/6 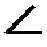 0° is passed to the third directional coupler 3, and the signal 1/3 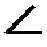 -90° is passed to the third fixed phase shifter 6. After the signal 1/6 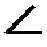 0° is passed through the third directional coupler 3, the signal of the first output end 3d and the second output end 3c are respectively 1/12 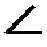 -90° and 1/12 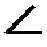 0°. After the signal 1/12 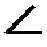 0° is again passed to the second fixed phase shifter 5, the signal of the second output port out2 is 1/12 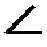 -90°. After the signal 1/3 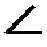 -90° is passed to the third fixed phase shifter 6, the signal of the first output port out1 is 1/3 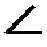 -270°. After the signal 1/2 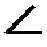 -90° of the first output end 1d of the first directional coupler 1 is passed through the first fixed phase shifter 4, the signal of the first input end 3a of the third directional coupler 3 is 1/2 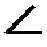 -180°, After the signal 1/2 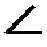 -180° is passed through the third directional coupler 3, the first output end 3d and the second output end 3c of the third directional coupler 3 are respectively 1/4 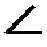 -180° and 1/4 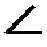 -270°, After 1/4 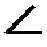 -270° is passed through the second fixed phase shifter 5, the signal of the second output port out2 is 1/4 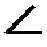 -360°, The signal from the second input port in2 to the second output port out2 is a superposition of vectors of the signal 1/2 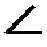 -90° and the signal 1/4 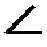 -360° and is 1/3 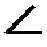 -30°, The signal from the second input port in2 to the third output port out3 is a superposition of vectors of the signal 1/2 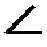 -90° and the signal 1/4 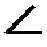 -180° and is 1/3 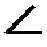 -150°.

Therefore, if the signal is input from the second input port in2, the signals of the first output port out1, the second output port out2 and the third output out3 are respectively 1/3 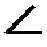 -270°, 1/3 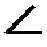 -30° and 1/3 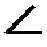 -150°, that is, when the second input port in2 is fed, the amplitudes and phases of the signals of the first to third output ports are equal and the difference of phases of powers allocated to the adjacent output ports is -120°.

If radio-frequency signal is input from the third input port in3, the signal is firstly passed through the first directional coupler 1 and then is divided into two outputs after being passed the first direction coupler 1. The signal of the first output end 1d is 1/2 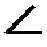 0°, and the signal of the second output end 1c is 1/2 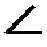 -90°, wherein the signal 1/2 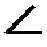 -90° is passed to the second directional coupler 2 and the signal 1/2 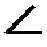 0° is passed to the first fixed phase shifter 4. After the signal 1/2 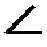 -90° is passed through the second directional coupler 2, the signals of the first output end 2d and the second output end 2c of the second directional coupler 2 are respectively 1/6 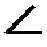 -90° and 1/3 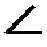 -180°, wherein the signal 1/6 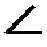 -90° is passed to the third directional coupler 3, and the signal 1/3 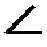 -180° is passed to the third fixed phase shifter 6. After the signal 1/6 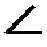 -90° is passed through the third directional coupler 3, the first output end 3d and the second output end 3c of the third directional coupler 3 are respectively 1/2 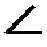 -180°, 1/2 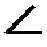 -90°. After the signal 1/2 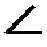 -90° is again passed to the second fixed phase shifter 5, the signal of the second output port out2 is 1/12 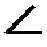 -180°. After the signal 1/3 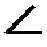 -180° is passed through the third fixed phase shifter 6, the signal of the first output port out1 is 1/3 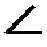 -360°. After the signal 1/2 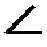 0° is passed through the first fixed phase shifter 4, the signal of the first input end 3a of the third directional coupler 3 is 1/2 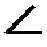 -90°. After the signal 1/2 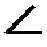 -90° is passed through the third directional coupler 3, the signals of the first output end 3d, the second output end 3c of the third directional coupler 3 are respectively 1/4 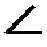 -90° and 1/4 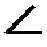 -180°. After 1/4 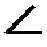 -180° is passed through the second fixed phase shifter 5, the signal of the second output port out2 is 1/4 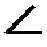 -270°. The signal from the third input port in3 to the second output port out 2 is a superposition of vectors of the signal 1/2 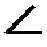 -180° and the signal 1/4 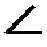 -270° and is 1/3 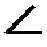 -240°. The signal from the third input port in3 to the third output port out3 is a superposition of vectors of the signal 1/12 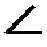 -180° and the signal 1/4 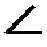 -90° and is 1/3 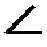 -120°. Therefore, if the signal is input from the third input port in3, the signals of the first output port out1, the second output port out2 and the third output out3 are respectively 1/3 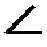 -360°, 1/3 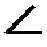 -240° and 1/3 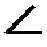 -120°, that is, when the third input port in3 is fed, the amplitudes of the signals of the first to third output ports are equal and the difference of phases of powers allocated to the adjacent output ports is +120°.

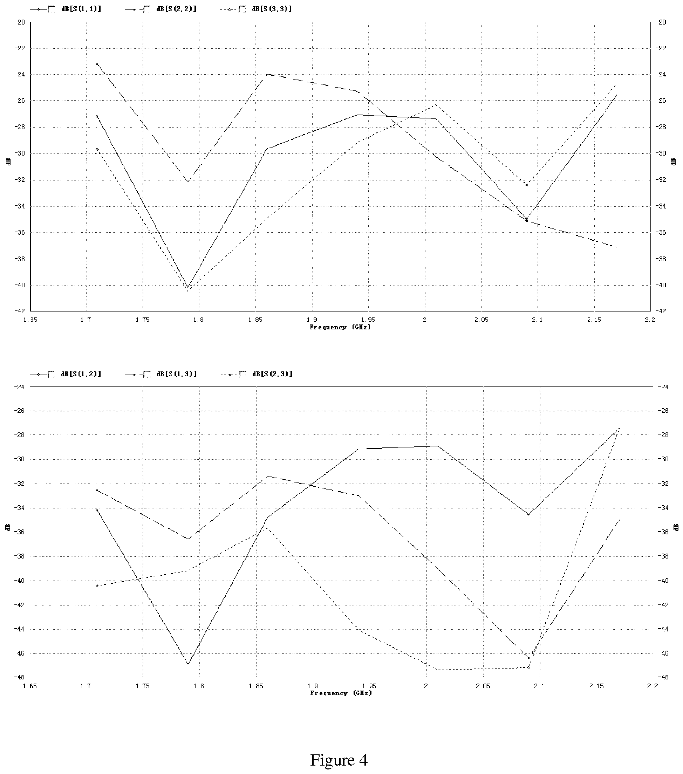

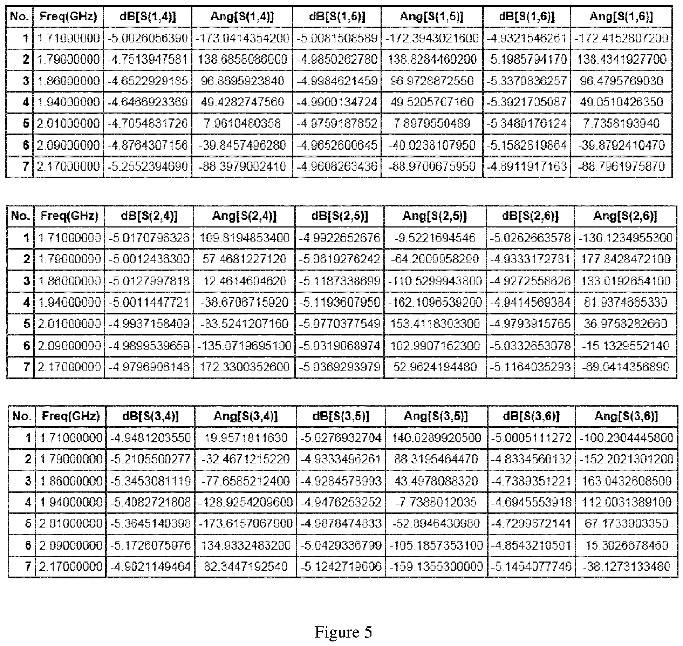

Figures 4 and 5 are IE3D simulation results of the Fig. 1-3. The ports 1, 2 and 3 are respectively corresponding to the first input port in1, the second input port in2 and the third input port in3, and the ports 4, 5 and 6 are respectively corresponding to the first output port out1, the second output port out2 and the third output port out3. As seen from figures, the return losses of the three beam ports, the first input port in1, the second input port in2 and the third input port in3 are below -23dB within broadband band 1710-217 MHz and the isolations between the first to third input ports are above 26dB within the working frequency. When the signal is input from the first input port in 1, the difference of phases of the adjacent output ports of the first to third output ports within the working frequency is within the range of 0°±1°, the amplitudes are all within the range of -5.0±0.4 dB and the losses are below 0.3 dB. When the signal is input from the second input port in2, the difference of phases of the adjacent output ports of the first to third output ports within the working frequency is within the range of -120°±4°, the amplitudes are all within the range of -5.0±0.2 dB and the losses are below 0.3 dB. When the signal is input from the third input port in3, the difference of phases of the adjacent output ports of the first to third output ports within the working frequency is within the range of 120°±2°, the amplitudes are all within the range of - 5.05±0.4 dB and the losses are below 0.3 dB.

Three antenna arrays may be connected to the output ports of the 3×3 Butler matrix for generating three beams of different orientation at the three input ports.

### Embodiment One

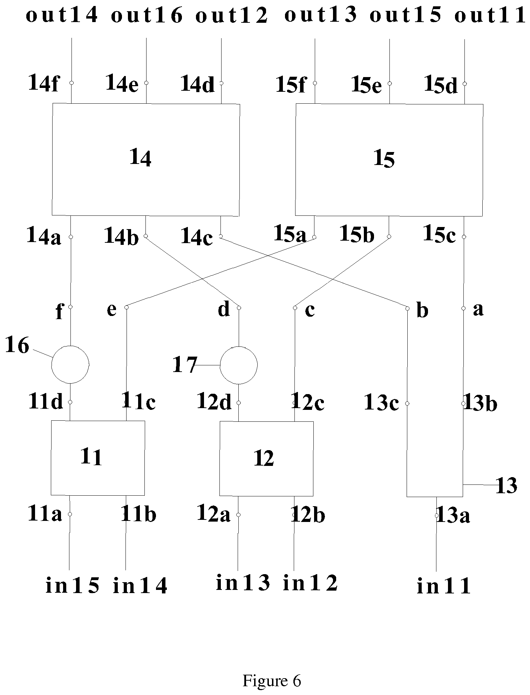

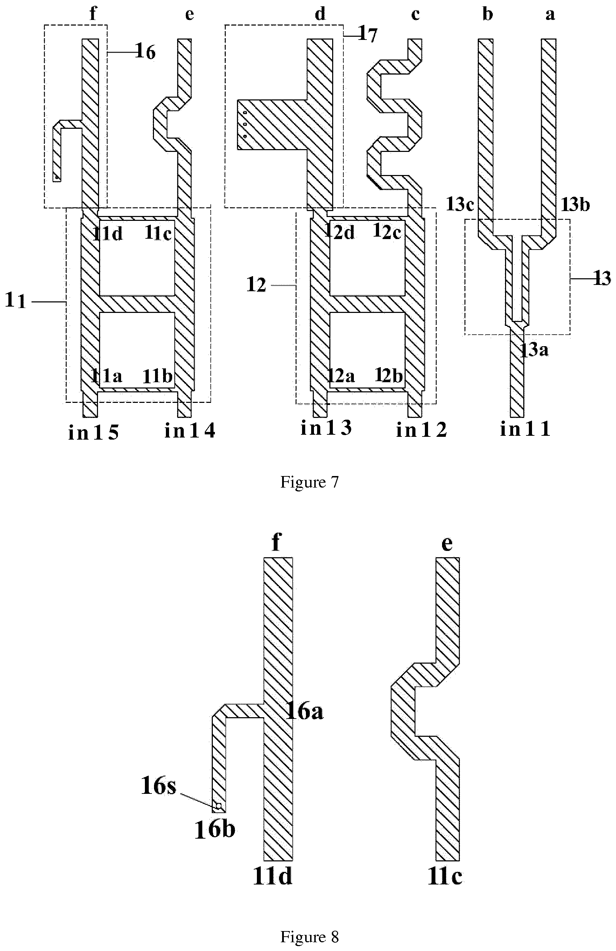

Referring to Figures 6 and 7, a 5×6 Butler matrix provided by the embodiment of the invention is composed of a fourth directional coupler 11 a fifth directional coupler 12, a power divider 13, a first 3×3 Butler matrix 14, a second 3×3 Butler matrix 15, a fourth fixed phase shifter 16 and a fifth fixed phase shifter 17. Each directional coupler has two input ends and two output ends, respectively a first input end, a second input end, a first output end and the second output end. The 5×6 Butler matrix has five signal input ports, respectively a first input port in 11 ,a second input port i in12, a third input port in13, a fourth input port in14 and a fifth input port i in15, and has six output ports, respectively a first output port out 11 , a second output port out12, a third output port out13, a fourth output port out14, a fifth output port, out15 and a sixth output port out16. The power divider 13 has an input end 13a, a first output end 13c and a second output end 13b.

The connecting relationship of respective components in the embodiment of the invention is shown in Figure 6. The input end 13a of the power divider 13 is connected to the first input port in11 of the 5x6 Butler matrix. The second output end 13b of the power divider 13 is connected to the first input end 15c of the second 3x3 Butler matrix 15, and the first output end 13c of the power divider 13 is connected to the first input end 14c of the first 3x3 Butler matrix 14. The second input end 12b of the fifth directional coupler 12 is connected to the second input port in12 of the 5x6 Butler matrix, the first input end 12a is connected to the third input port inl3 of the 5x6 Butler matrix, the second output end 12c is connected to the second input end 15b of the second 3x3 Butler matrix 15 and the first output end 12d is connected to the second input end 14b of the first 3x3 Butler matrix 14 via the fifth fixed phase shifter 17. The second input end 11b of the fourth directional coupler 11 is connected to the fourth input port inl4 of the 5x6 Butler matrix, the first input end 11a is connected to the fifth input port inl5 of the 5x6 Butler matrix, the second output end 11c is connected to the third input end 15a of the second 3x3 Butler matrix 15, and the first output end 11d is connected to the third input end 14a of the first 3x3 Butler matrix 14 via the fourth fixed phase shifter 16. The first output end 15d, the second output end 15e and the third output end 15f of the second 3x3 Butler matrix 15 are respectively connected to the first output port out11, the fifth output port outl5 and the third output port outl3 of the 5x6 Butler matrix. The first output end 14d, the second output end 14c and the third output end 14f are respectively connected to the second output port out12, the sixth output port outl6 and the fourth output port outl4 of the 5x6 Butler matrix. Particularly, the fourth directional coupler 11 and the fifth directional coupler 12 are both directional couplers with equal power division having 90 degrees phase shift characteristic. The working principles thereof are the same as that of the first directional coupler and the third directional coupler in Example One, and thus will not be described. Since the 3x3 Butler matrix provided by Example One is employed in the embodiment of the invention, to avoid that the schematic view is too complicated, the first 3x3 Butler matrix 14 and the second 3x3 Butler matrix 15 are omitted in Figure 7 and only the structure below the nodes a, b, c, d, e and f is shown in Figure 6. Particularly, in the embodiment of the invention, the fourth directional coupler 11 and the fifth directional coupler 12 are both implemented by employing branchline couplers of broad frequency. As the same with the structures of the first to third directional couplers in Example One, the structures of the fourth directional coupler 11 and the fifth directional coupler 12 also have a shape of " 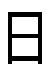 ", wherein the two nodes at the left bottom and at the right bottom are respectively the first input end and the second input end, and the two nodes at the left top and at the right top are respectively the first output end and the second output end. The power divider 13 is an equipower and equiphase power divider That is, when the signal is fed from the input end 13a of the power divider 13, the phases of the signals of the first output end 13c and the second output end 13b of the power divider 13 are equal and the amplitudes are same. In the embodiment of the invention, the power divider 13 is implemented by employing 3dB Wilkinson power divider structure. Further, the fourth fixed phase shifter 16 is a 30° advanced phase shifter located between the first output end 11d of the fourth directional coupler 11 and the third input end 14a of the first 3x3 Butler matrix 14. The fifth fixed phase shifter 17 is a 150° advanced phase shifter located between the first output end 12d of the fifth directional coupler 12 and the second input end 14b of the first 3x3 Butler matrix 14. In the embodiment of the invention, since the structures of the fourth fixed phase shifter and the fifth fixed phase shifter are similar and principles of them are same, the fourth fixed phase shifter 16 is herein just taken as an example. Referring to figure 8, the structure and principle of the fourth fixed phase shifter 16 are analyzed. The fourth fixed phase shifter 16 is composed of three transmission lines, respectively 11d-16a, 16a-f and 16a-16b transmission lines, wherein 11d-16a and 16a-f transmission lines are of the same line width (impedance) and of the same electrical length, both are λ/4 (λ is center frequency of working frequency of the fixed phase shifter), and 16a-16b s a λ/4 short-circuited transmission line parallel connected and the terminal thereof is short circuited with floor (not shown) via a conductive hole 16s. Firstly, the transfer phase of 11d-f transmission line in the center frequency is advanced 30° with respect to that of 11c-e transmission line by adjusting line length of 11c-e, and then the advance value of the transfer phase of 11d-f in the center frequency with respect to that of 11c-e is changed by adjusting the width (impedance) of 11d-f and 16b-16b transmission lines. The transfer phase of 11d-f transmission line within the whole working frequency is advanced 30° with respect to that of 11c-e transmission line with the error within ±1° by selecting suitable line width (impedance) of 11d-f and 16a-16b transmission lines. The particular structures of the first 3x3 Butler matrix 14 and the second 3x3 Butler matrix 15 are the same as the structure provided by Example One and thus will not be described.

Further, in the embodiment of the invention , the nodes a, b, c, d, e and f are connected with the first to third input ports of the first 3×3 Butler matrix 14 and the first to third input ports of the second 3×3 Butler matrix : 15 by using 50 ohm cables (not shown) of the same length.

The working principle of the embodiment of invention is as follows:
If radio-frequency signal is input from the first input port in11, the signal is firstly passed through the power divider 13 and then is divided into two outputs after being passed the power divider 13. The signal of the first output end 13c of the power divider 13 is 1/2 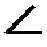 0°. The 1/2 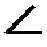 0° is passed to the first 3×3 Butler matrix 14. After the 1/2 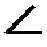 0° is passed through the first 3×3 Butler matrix 14, the signals of the second output port out12, the fourth output port out14 and the sixth output port out16 of the 5×6 Butler matrix are respectively 1/6 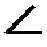 0°, 1/6 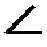 0°, 1/6 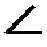 0°. The signal of the second output end 13b of the power divider 13 is 1/2 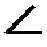 0°. The 1/2 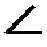 0° is passed to the second 3×3 Butler matrix 15. After the 1/2 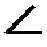 0° is passed through the second 3×3 Butler matrix 15, the signals of the first output port out11, the third output port out13 and the fifth output port out15 of the 5×6 Butler matrix are respectively 1/6 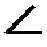 0°, 1/6 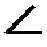 0°, 1/6 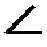 0°. Therefore, if the signal is input from the first input port i in11, the signals of the first to sixth output ports are respectively 1/6 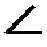 0°, 1/6 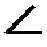 0°, 1/6 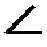 0°, 1/6 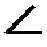 0°, 1/6 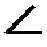 0°, 1/6 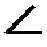 0°. The amplitudes of the powers allocated to the adjacent output ports are the same, is 1/6, and the difference of phases of the powers allocated to the adjacent output ports is 0°. If a radio-frequency signal is input from the second input port in12, the signal is firstly passed through the fifth directional coupler 12 and the fifth fixed phase shifter 17 and then is divided into two outputs after being passed through the fifth directional coupler 12 and the fifth fixed phase shifter 17. The signal of the first output end 12d of the fifth directional coupler 12 is 1/2 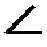 -90°. After the signal 1/2 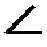 -90° is passed through the fifth fixed phase shifter 17, the signal is 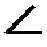 +60°. The signal 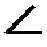 +60° is passed to the first 3×3 Butler matrix 14. After the signal 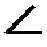 +60° is passed through the first 3×3 Butler matrix 14, the signals of the second output port out12, the sixth output port outl6 and the fourth output port outl4 of the 5×6 Butler matrix are respectively 1/6 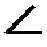 +60°, 1/6 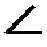 -60°, 1/6 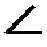 -180°. The signal of the second output end 12c of the fifth directional coupler 12 is 1/2 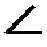 0°. The signal 1/2 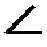 0° is passed to the second 3×3 Butler matrix 15. After the signal 1/2 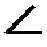 0° is passed through the second 3×3 Butler matrix 15, the signals of the first output port out11, the fifth output outl5 and the third output port out13 of the 5×6 Butler matrix are respectively 1/6 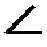 0°, 1/6 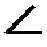 -120°, 1/6 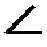 -240°. Therefore, if the signal is input from the second input port in12, the signals of the first to sixth input ports are respectively 1/6 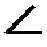 0°, 1/6 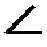 +60°, 1/6 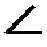 -240°, 1/6 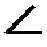 -180°, 1/6 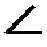 -120°, 1/6 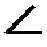 -60°. The amplitudes of the powers allocated to the adjacent output ports are the same, is 1/6, and the difference of phases of the powers allocated to the adjacent output ports is +60°.

If a radio-frequency signal is input from the third input port inl3, the signal is firstly passed through the fifth directional coupler 12 and the fifth fixed phase shifter 17 and then is divided into two outputs after being passed through the fifth directional coupler 12 and the fifth fixed phase shifter 17. The signal of the first output end 12d of the fifth directional coupler 12 is is 1/2 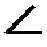 0°. After the signal 1/2 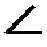 0° is passed through the fifth fixed phase shifter 17, the signal is 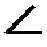 150°. The signal 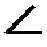 +150° is passed to the first 3×3 Butler matrix 14. After the signal 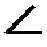 +150° is passed through the first 3×3 Butler matrix 14, the signals of the second output port out12, the sixth output port outl6 and the fourth output port out14 of the 5×6 Butler matrix are respectively 1/6 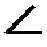 +150°, 1/6 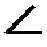 +30°, 1/6 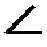 -90°. The signal of the second output end 12c of the fifth directional coupler 12 is 1/2 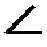 -90°. The signal 1/2 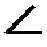 -90° is passed to the second 3×3 Butler matrix : 15. After the signal 1/2 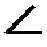 -90° is passed through the second 3×3 Butler matrix 15, the signals of the first output port out11, the fifth output out15 and the third output port out13 of the 5×6 Butler matrix are respectively 1/6 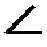 -90°, 1/6 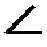 -210°, 1/6 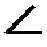 -330°. Therefore, if the signal is input from the third input port in13, the signals of the first to sixth input ports are respectively 1/6 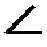 -90°, 1/6 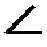 +150°, 1/6 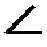 -330°, 1/6 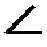 -90°, 1/6 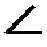 -210°, 1/6 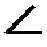 +30°. The amplitudes of the powers allocated to the adjacent output ports are the same, is 1/6, and the difference of phases of the powers allocated to the adjacent output ports is -120°.

If a radio-frequency signal is input from the fourth input port inl4, the signal is firstly passed through the fourth directional coupler 11 and the fourth fixed phase shifter 16 and then is divided into two outputs after being passed through the fourth directional coupler 11 and the fourth fixed phase shifter 16. The signal of the first output end 11d of the fourth directional coupler 11 is 1/2∠-90°. After the signal 1/2∠-90° is passed through the fourth fixed phase shifter 16, the signal is∠-60°. The signal∠-60° is passed to the first 3×3 Butler matrix 14. After the signal∠-60° is passed through the first 3×3 Butler matrix 14, the signals of the second output port out12, the sixth output port out16 and the fourth output port out14 of the 5×6 Butler matrix are respectively 1/6∠-60°, 1/6∠+60°, 1/6∠+180°. The signal of the second output end 11c of the fourth directional coupler 11 is 1/2∠0°. The signal 1/2∠0° is passed to the second 3×3 Butler matrix 15. After the signal 1/2∠0° is passed through the second 3×3 Butler matrix 15, the signals of the first output port out11, the fifth output out15 and the third output port out13 of the 5×6 Butler matrix are respectively 1/6∠0°, 1/6∠+120°, 1/6∠+240°.

Therefore, if the signal is input from the fourth input port in14, the signals of the first to sixth input ports are respectively 1/6∠0°, 1/6∠-60°, 1/6∠+240°, 1/6∠+180°, 1/6∠+120°, 1/6∠-+60°. The amplitudes of the powers allocated to the adjacent output ports are the same, is 1/6, and the difference of phases of the powers allocated to the adjacent output ports is -60°.

If a radio-frequency signal is input from the fifth input port inl5, the signal is firstly passed through the fourth directional coupler 11 and the fourth fixed phase shifter 16 and then is divided into two outputs after being passed through the fourth directional coupler 11 and the fourth fixed phase shifter 16. The signal of the first output end 11d of the fourth directional coupler 11 is 1/2∠0°. After the signal 1/2∠0° is passed through the fourth fixed phase shifter 16, the signal is∠+30°. The signal∠+30° is passed to the first 3×3 Butler matrix 14. After the signal∠+30° is passed through the first 3×3 Butler matrix 14, the signals of the second output port out12, the sixth output port outl6 and the fourth output port out14 of the 5×6 Butler matrix are respectively 1/6∠+30°, 1/6∠+150°, 1/6∠+270°. The signal of the second output end 11c of the fourth directional coupler 11 is 1/2∠-90°. The signal 1/2∠-90° is passed to the second 3×3 Butler matrix 15. After the signal 1/2∠-90° is passed through the second 3×3 Butler matrix 15, the signals of the first output port out11, the fifth output out15 and the third output port out13 of the 5×6 Butler matrix are respectively 1/6∠-90°, 1/6∠+30°, 1/6∠+150°. Therefore, if the signal is input from the fifth input port in15, the signals of the first to sixth input ports are respectively 1/6∠-90°, 1/6∠+30°, 1/6∠+150°, 1/6∠+270°, 1/6∠+30°, 1/6∠+150°. The amplitudes of the powers allocated to the adjacent output ports are the same, is 1/6, and the difference of phases of the powers allocated to the adjacent output ports is +120°.

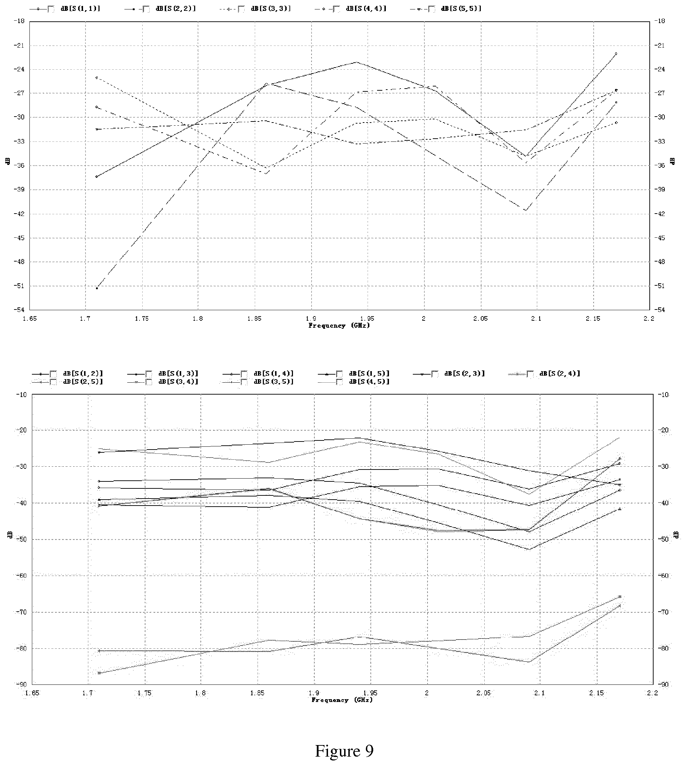

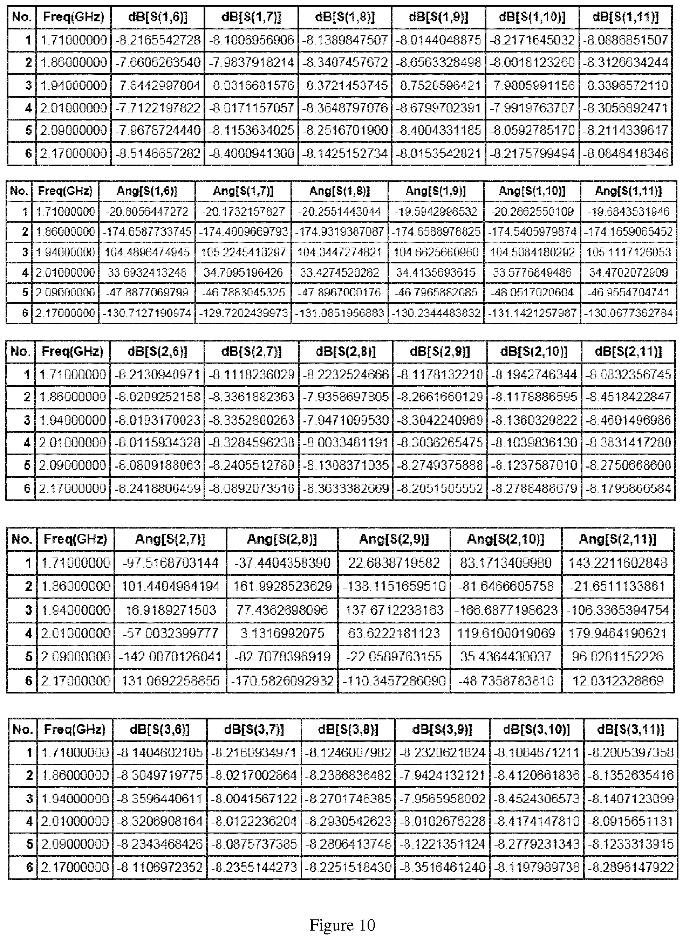

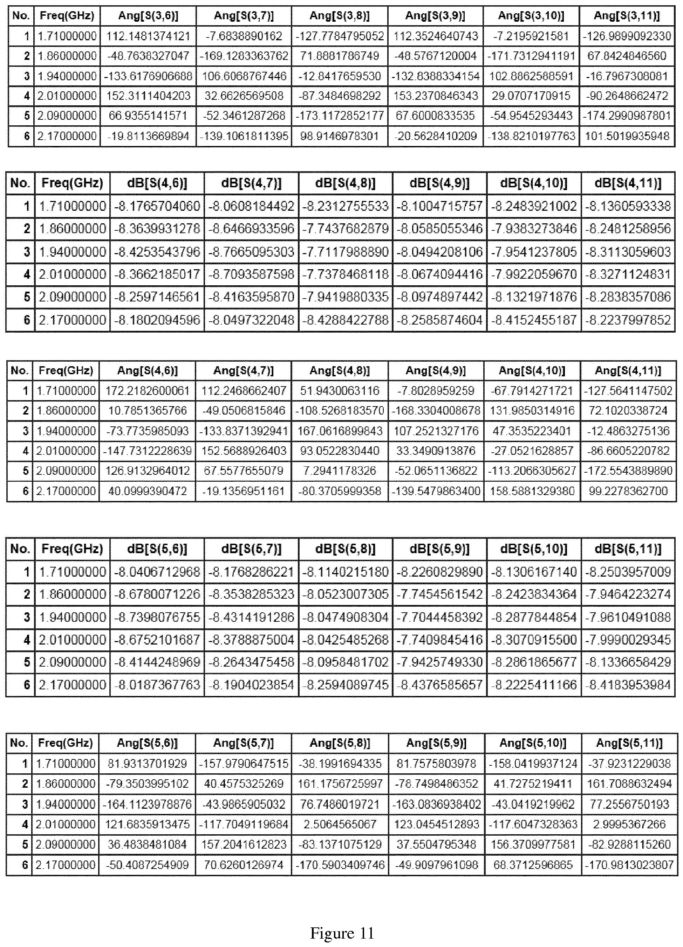

Figures 9 to 11 are IE3D simulation results of the embodiment of the invention. In the process of simulation, the cables between nodes a, b, c, d, e, f and the first to third input ports of the first 3×3 Butler matrix 14 and the first to third input ports of the second 3×3 Butler matrix 15 are replaced by 50 ohm transmission lines. The ports 1, 2, 3, 4, 5 are respectively corresponding to the first to fifth input ports, and the ports 6, 7, 8, 9, 10, 11 are respectively corresponding to the first to sixth output ports. As seen from figures, the return losses of the five beam ports of the first to fifth input ports are below -22dB within broadband band 1710-217 MHz and the isolations between the first to fifth input ports are above 22dB within the working frequency. When the signal is input from the first input port in11, the difference of phases of the adjacent ports of the first to sixth output ports within the working frequency is within the range of 0°±2°, the amplitudes are all within the range of - 8.1±0.5 dB and the losses are below 0.5 dB. When the signal is input from the second input port in12, the difference of phases of the adj acent ports of the first to sixth output ports within the working frequency is within the range of +60°±4.5°, the amplitudes are all within the range of -8.15±0.22 dB and the losses are below 0.5 dB. When the signal is input from the third input port in13, the difference of phases of the adjacent ports of the first to sixth output ports within the working frequency is within the range of -120°±2°, the amplitudes are all within the range of -8.16±0.2 dB and the losses are below 0.5 dB. When the signal is input from the fourth input port in14, the difference of phases of the adjacent ports of the first to sixth output ports within the working frequency is within the range of -60°±2°, the amplitudes are all within the range of -8.07±0.4 dB and the losses are below 0.5 dB. When the signal is input from the fifth input port in15, the difference of phases of the adjacent ports of the first to sixth output ports within the working frequency is within the range of +120°±2°, the amplitudes are all within the range of -8.22±0.52 dB and the losses are below 0.5 dB.

Five antenna arrays may be connected to the output ports of the 5×6 Butler matrix provided by the embodiment of the invention for generating five beams of different orientation at the five input ports.

The above embodiments are only several embodiments of the invention. The descriptions thereof are more particular and detailed but they should not be understood as limitations to the scope of the invention. It is noted that several variations and improvements may also be made to those ordinary skills in the art without departing from the scope of the appended claims.

## Claims

1. A 5x6 Butler matrix comprising 3x3 Butler matrixes, respectively a first 3x3 Butler matrix (14) and a second 3x3 Butler matrix (15) wherein each of the 3x3 Butler matrixes comprises
a first directional coupler (1), a second directional coupler (2) and a third directional coupler (3), where each directional coupler has two input ends and two output ends, respectively a first input end, a second input end, a first output end and a second output end;
where the first input ends and the first output ends of the first to third directional coupler are distributed at same first sides, of the respective directional coupler , and the second input ends and the second output ends are distributed at same second sides opposite to the first sides of the respective directional coupler , where the first directional coupler and the third directional coupler are directional couplers with equal power division having 90 degrees phase shift characteristic, and the powers allocated to the two ends thereof are equal and respectively half the power of the input signal; and the second directional coupler is a directional coupler with unequal power division having 90 degrees phase shift characteristic, the powers allocated to the two ends thereof are respectively one third and two thirds of the power of the input signal;
the first to third directional couplers being configured such that when any input end of the first, the second or the third directional coupler is fed, the transfer phase of the output end thereof at the opposite side is delayed 90 degrees with respect to that of the other output end of the same side;
a first fixed phase shifter (4), a second fixed phase shifter (5) and a third fixed phase shifter (6);
the 3x3 Butler matrix has three input ports and three output ports, respectively a first input port (in1), a second input port (in2), a third input port (in3), a first output port (out1), a second output port (out2) and a third output port (out3);
the second input end (2b) of the second directional coupler (2) is connected to the first input port (in1), the second input end (1b) of the first directional coupler (1) is connected to the second input port (in2), the first input end (1a) of the first directional coupler (1) is connected to the third input port (in3), the first output end (1d) of the first directional coupler (1) is connected to the first input end (3a) of the third directional coupler (3) via the first fixed phase shifter (4), the second output end (1c) of the first directional coupler (1) is connected with the first input end (2a) of the second directional coupler (2), the first output end (2d) of the second directional coupler (2) is connected with the second input end (3b) of the third directional coupler (3), the second output end (2c) of the second directional coupler (2) is connected to the first output port (out1) via the third fixed phase shifter (6), the second output end (3c) of the third directional coupler (3) is connected to the second output port (out2) via the second fixed phase shifter (5), the first output end (3d) of the third directional coupler (3) is connected to the third output port (out3);
the transfer phase of the first fixed phase shifter (4) is delayed 90 degrees with respect to that from the first input end (2a) to the first output end (2d) of the second directional coupler (2), the transfer phase of the second fixed phase shifter (5) is delayed 90 degrees with respect to that from the first output end (3d) of the third directional coupler (3) to the third output port (out3), and the transfer phase of the third fixed phase shifter (6) is delayed 90 degrees with respect to that from the first output end (2d) of the second directional coupler (2) to the second output port (out2), wherein the structures of the first to third fixed phase shifters include two λ/4 transmission lines connected in series and of the same impedance and a λ/4 short-circuit transmission line or λ/2 open-circuit transmission line connected at the middle point of these two transmission lines, and λ is center frequency of working frequency of the fixed phase shifter ;
the 5x6 Butler matrix further comprising a fourth directional coupler (11), a fifth directional coupler (12), a power divider (13), a fourth fixed phase shifter (16) and a fifth fixed phase shifter (17), wherein each of the fourth and fifth directional couplers (11, 12) has two input ends and two output ends, respectively a first input end, a second input end, a first output end and a second output end, the power divider has an input end, a first output end and a second output end;
the 5x6 Butler matrix has five input ports and six output ports, respectively a first to fifth input ports (in11, in12, in13, in14, in15) and a first to sixth output ports (out11, out12, outl3, outl4, outl5);
the input end (13a) of the power divider (13) is connected to the first input port (in11) of the 5x6 Butler matrix, the second output end (13b) of the power divider (13) is connected to the first input end (15c) of the second 3x3 Butler matrix (15), the first output end (13c) of the power divider (13) is connected to the first input end (14c) of the first 3x3 Butler matrix (14), the second input end (12b) of the fifth directional coupler (12) is connected to the second input port (in12) of the 5x6 Butler matrix, the first input end (12a) of the fifth directional coupler (12) is connected to the third input port (inl3) of the 5x6 Butler matrix, the second output end (12c) of the fifth directional coupler (12) is connected to the second input end (15b) of the second 3x3 Butler matrix (15), the first output end (12d) of the fifth directional coupler (12) is connected to the second input end (14b) of the first 3x3 Butler matrix (14) via the fifth fixed phase shifter (17), the second input end (11b) of the fourth directional coupler (11) is connected to the fourth input port (in14) of the 5x6 Butler matrix, the first input end (11a) of the fourth directional coupler (11) is connected to the fifth input port (in15) of the 5x6 Butler matrix, the second output end (11c) of the fourth directional coupler (11) is connected to the third input end (15a) of the second 3x3 Butler matrix (15), the first output end (11d) of the fourth directional coupler (11) is connected to the third input end (14a) of the first 3x3 Butler matrix (14) via the fourth fixed phase shifter (16), the first output end (15d), the second output end (15e) and the third output end (15f) of the second 3x3 Butler matrix (15) are respectively connected to the first output port (out11), the fifth output port (outl5) and the third output port (outl3) of the 5x6 Butler matrix, the first output end (14d), the second output end (14c) and the third output end (14f) of the first 3x3 Butler matrix (14) are respectively connected to the second output port (out12), the sixth output port (outl6) and the fourth output port (outl4) of the 5x6 Butler matrix; the fourth fixed phase shifter (16) is a 30° advanced phase shifter, and the fifth fixed phase shifter (17) is a 150° advanced phase shifter.

2. The 5x6 Butler matrix according to claim 1, wherein the first input ends and the first output ends of the fourth directional coupler (11) and the fifth directional coupler (12) are distributed at same first sides of the respective directional coupler and the second input ends and the second output ends are distributed at same second sides opposite to the first sides of the respective directional coupler;
the fourth directional coupler (11) and the fifth directional coupler (12) are both directional couplers with equal power division having 90 degrees phase shift characteristic, the powers allocated to the two output ends thereof are equal and respectively half of the power of the input signal; the fourth and fifth directional couplers being configured such that, when any input end of the fourth or fifth directional coupler is fed, the transfer phase of the output end thereof at the opposite side is delayed 90 degrees with respect to that of the other output end of the same side.

3. The 5x6 Butler matrix according to claim 1, wherein the fourth directional coupler (11) and the fifth directional coupler (12) are branch-line couplers or coupled-line couplers.

4. The 5x6 Butler matrix according to claim 1, wherein the power divider (13) is an equipower and equiphase power divider.

5. The 5x6 Butler matrix according to claim 1, wherein t :he first to third directional couplers and the first to third fixed phase shifters of the first and second 3x3 Butler matrixes are micro-strip or strip-line structure.

6. The 5x6 Butler matrix according to claim 5, wherein t :he first to third directional couplers of the first and second 3x3 Butler matrixes are branch-line couplers or coupled-line couplers.

## Patentansprüche

1. 5×6-Butler-Matrix mit 3×3-Butler-Matrizen bzw. einer ersten 3×3-Butler-Matrix (14) und einer zweiten 3×3-Butler-Matrix (15), wobei jede der 3×3-Butler-Matrizen
einen ersten Richtkoppler (1), einen zweiten Richtkoppler (2) und einen dritten Richtkoppler (3) umfasst, wobei jeder Richtkoppler zwei Eingangsenden und zwei Ausgangsenden aufweist, jeweils ein erstes Eingangsende, ein zweites Eingangsende, ein erstes Ausgangsende und ein zweites Ausgangsende;
wobei die ersten Eingangsenden und die ersten Ausgangsenden des ersten bis dritten Richtkopplers auf denselben ersten Seiten des jeweiligen Richtkopplers verteilt sind und die zweiten Eingangsenden und die zweiten Ausgangsenden auf denselben zweiten Seiten des jeweiligen Richtkopplers gegenüber den ersten Seiten verteilt sind,
wobei der erste Richtkoppler und der dritte Richtkoppler Richtkoppler mit gleicher Leistungsteilung mit einer Phasenverschiebungscharakteristik von 90 Grad sind und die ihren beiden Enden zugewiesenen Leistungen gleich bzw. jeweils halb so groß wie die Leistung des Eingangssignals sind; und der zweite Richtkoppler ein Richtkoppler mit ungleicher Leistungsteilung mit einer Phasenverschiebungscharakteristik von 90 Grad ist, wobei die seinen beiden Enden zugewiesenen Leistungen jeweils ein Drittel und zwei Drittel der Leistung des Eingangssignals betragen;
die ersten bis dritten Richtkoppler sind so konfiguriert, dass, wenn irgendein Eingangsende des ersten, des zweiten oder des dritten Richtkopplers gespeist wird, die Übertragungsphase des Ausgangsendes davon auf der gegenüberliegenden Seite um 90 Grad in Bezug auf die Übertragungsphase des anderen Ausgangsendes derselben Seite verzögert wird;
einen ersten Festphasenschieber (4), einen zweiten Festphasenschieber (5) und einen dritten Festphasenschieber (6);
die 3x3-Butler-Matrix verfügt über drei Eingangsports und drei Ausgangsports bzw. einen ersten Eingangsport (in1) einen zweiten Eingangsport (in2), einen dritten Eingangsport (in3), einen ersten Ausgangsport (out1), einen zweiten Ausgangsport (out2) und einen dritten Ausgangsport (out3);
das zweite Eingangsende (2b) des zweiten Richtkopplers (2) ist mit dem ersten Eingangsport (in1) verbunden, das zweite Eingangsende (1b) des ersten Richtkopplers (1) ist mit dem zweiten Eingangsport (in2) verbunden, das erste Eingangsende (1a) des ersten Richtkopplers (1) ist mit dem dritten Eingangsport (in3) verbunden, das erste Ausgangsende (1d) des ersten Richtkopplers (1) ist über den ersten Festphasenschieber (4) mit dem ersten Eingangsende (3a) des dritten Richtkopplers (3) verbunden, das zweite Ausgangsende (1c) des ersten Richtkopplers (1) ist mit dem ersten Eingangsende (2a) des zweiten Richtkopplers (2) verbunden, das erste Ausgangsende (2d) des zweiten Richtkopplers (2) ist mit dem zweiten Eingangsende (3b) des dritten Richtkopplers (3) verbunden, das zweite Ausgangsende (2c) des zweiten Richtkopplers (2) ist über den dritten Festphasenschieber (6) mit dem ersten Ausgangsport (out1) verbunden, das zweite Ausgangsende (3c) des dritten Richtkopplers (3) ist über den zweiten Festphasenschieber (5) mit dem zweiten Ausgangsport (out2) verbunden, das erste Ausgangsende (3d) des dritten Richtkopplers (3) ist mit dem dritten Ausgangsport (out3) verbunden;
die Übertragungsphase des ersten Festphasenschiebers (4) ist gegenüber der Übertragungsphase vom ersten Eingangsende (2a) zum ersten Ausgangsende (2d) des zweiten Richtkopplers (2) um 90 Grad verzögert.
die Übertragungsphase des zweiten Festphasenschiebers (5) ist gegenüber der Übertragungsphase vom ersten Ausgangsende (3d) des dritten Richtkopplers (3) zum dritten Ausgangsport (out3) um 90 Grad verzögert, und die Übertragungsphase des dritten Festphasenschiebers (6) ist gegenüber der Übertragungsphase vom ersten Ausgangsende (2d) des zweiten Richtkopplers (2) zum zweiten Ausgangsport (out2) um 90 Grad verzögert,
wobei die Strukturen der ersten bis dritten Festphasenschieber zwei in Reihe geschaltete λ/4-Übertragungsleitungen mit gleicher Impedanz und eine λ/4-Kurzschlussübertragungsleitung oder eine λ/2-Übertragungsleitung mit offenem Schaltkreis, die am Mittelpunkt dieser beiden Übertragungsleitungen angeschlossen ist, umfassen, und wobei λ die Mittenfrequenz der Arbeitsfrequenz des Festphasenschiebers ist; die 5×6-Butler-Matrix, ferner umfassend einen vierten Richtkoppler (11), einen fünften Richtkoppler (12), einen Leistungsteiler (13), einen vierten Festphasenschieber (16) und einen fünften Festphasenschieber (17), wobei jeder der vierten und fünften Richtkoppler (11, 12) zwei Eingangsenden und zwei Ausgangsenden aufweist, jeweils ein erstes Eingangsende, ein zweites Eingangsende, ein erstes Ausgangsende und ein zweites Ausgangsende; der Leistungsteiler hat ein Eingangsende, ein erstes Ausgangsende und ein zweites Ausgangsende;
die 5x6-Butler-Matrix verfügt über fünf Eingangsports und sechs Ausgangsports, jeweils den ersten bis fünften Eingangsport (in11, in12, in13, in14, in15) und den ersten bis sechsten Ausgangsport (out11, out12, out13, out14, out15);
das Eingangsende (13a) des Leistungsteilers (13) ist mit dem ersten Eingangsport (in11) der 5x6-Butler-Matrix verbunden, das zweite Ausgangsende (13b) des Leistungsteilers (13) ist mit dem ersten Eingangsende (15c) der zweiten 3×3-Butler-Matrix (15) verbunden, das erste Ausgangsende (13c) des Leistungsteilers (13) ist mit dem ersten Eingangsende (14c) der ersten 3×3-Butler-Matrix (14) verbunden, das zweite Eingangsende (12b) des fünften Richtkopplers (12) ist mit dem zweiten Eingangsport (in12) der 5x6-Butler-Matrix verbunden, das erste Eingangsende (12a) des fünften Richtkopplers (12) ist mit dem dritten Eingangsport (in13) der 5x6-Butler-Matrix verbunden, das zweite Ausgangsende (12c) des fünften Richtkopplers (12) ist mit dem zweiten Eingangsende (15b) der zweiten 3x3-Butler-Matrix (15) verbunden, das erste Ausgangsende (12d) des fünften Richtkopplers (12) ist über den fünften Festphasenschieber (17) mit dem zweiten Eingangsende (14b) der ersten 3x3-Butler-Matrix (14) verbunden, das zweite Eingangsende (11b) des vierten Richtkopplers (11) ist mit dem vierten Eingangsport (in14) der 5x6-Butler-Matrix verbunden, das erste Eingangsende (11a) des vierten Richtkopplers (11) ist mit dem fünften Eingangsport (in15) der 5x6-Butler-Matrix verbunden, das zweite Ausgangsende (11c) des vierten Richtkopplers (11) ist mit dem dritten Eingangsende (15a) der zweiten 3×3-Butler-Matrix (15) verbunden, das erste Ausgangsende (11d) des vierten Richtkopplers (11) ist über den vierten Festphasenschieber (16) mit dem dritten Eingangsende (14a) der ersten 3×3-Butler-Matrix (14) verbunden, das erste Ausgangsende (15d), das zweite Ausgangsende (15e) und das dritte Ausgangsende (15f) der zweiten 3x3-Butler-Matrix (15) sind jeweils mit dem ersten Ausgangsport (cur11), dem fünften Ausgangsport (out15) und dem dritten Ausgangsport (out13) der 3x6-Butler-Matrix verbunden, das erste Ausgangsende (14d), das zweite Ausgangsende (14c) und das dritte Ausgangsende (14f) der ersten 3×3-Butler-Matrix (14) sind jeweils mit dem zweiten Ausgangsport (out12), dem sechsten Ausgangsport (out16) und dem vierten Ausgangsport (out14) der 5x6-Butler-Matrix verbunden; der vierte Festphasenschieber (16) ist ein 30° fortgeschrittener Phasenschieber, und der fünfte Festphasenschieber (17) ist ein 150° fortgeschrittener Phasenschieber.

2. 5×6-Butler-Matrix nach Anspruch 1, wobei die ersten Eingangsenden und die ersten Ausgangsenden des vierten Richtkopplers (11) und des fünften Richtkopplers (12) auf denselben ersten Seiten des jeweiligen Richtkopplers verteilt sind, und die zweiten Eingangsenden und die zweiten Ausgangsenden auf denselben zweiten Seiten gegenüber den ersten Seiten des jeweiligen Richtkopplers verteilt sind;
der vierte Richtkoppler (11) und der fünfte Richtkoppler (12) sind beide Richtkoppler mit gleicher Leistungsteilung mit einer Phasenverschiebungscharakteristik von 90 Grad, wobei die ihren beiden Ausgangsenden zugewiesenen Leistungen gleich bzw. jeweils die Hälfte der Leistung des Eingangssignals sind;
der vierte und der fünfte Richtkoppler sind so konfiguriert, dass, wenn ein Eingangsende des vierten oder des fünften Richtkopplers eingespeist wird, die Übertragungsphase des Ausgangsendes davon auf der gegenüberliegenden Seite um 90 Grad in Bezug auf die Übertragungsphase des anderen Ausgangsendes derselben Seite verzögert wird.

3. 5×6-Butler-Matrix nach Anspruch 1, wobei der vierte Richtkoppler (11) und der fünfte Richtkoppler (12) Verzweigungskoppler oder gekoppelte Leitungen sind.

4. 5×6-Butler-Matrix nach Anspruch 1, wobei der Leistungsteiler (13) ein gleichteiliger und gleichphasiger Leistungsteiler ist.

5. 5×6-Butler-Matrix nach Anspruch 1, wobei der erste bis dritten Richtkoppler und der erste bis dritten Festphasenschieber der ersten und zweiten 3×3-Butler-Matrix Mikrostreifen- oder Streifenleitungsstrukturen aufweisen.

6. 5×6-Butler-Matrix nach Anspruch 5, wobei der erste bis dritten Richtkoppler der ersten und zweiten 3x3-Butler-Matrizen Verzweigungskoppler oder gekoppelte Leitungen sind.

## Revendications

1. Une matrice de Butler 5x6 comprenant des matrices de Butler 3x3, respectivement une première matrice de Butler 3x3 (14)
et une seconde matrice de Butler 3x3 (15), dans laquelle chacune des matrices de Butler 3x3 comprend
un premier coupleur directionnel (1), un deuxième coupleur directionnel (2) et un troisième coupleur directionnel (3), où chaque coupleur directionnel possède deux extrémités d'entrée et deux extrémités de sortie, respectivement une première extrémité d'entrée, une seconde extrémité d'entrée, une première extrémité de sortie et une seconde extrémité de sortie ;
où les premières extrémités d'entrée et les premières extrémités de sortie du premier au troisième coupleur directionnel sont réparties sur les mêmes premiers côtés du coupleur directionnel respectif
et les secondes extrémités d'entrée et les secondes extrémités de sortie sont réparties Sur les mêmes deuxièmes côtés apposés aux premiers côtés du coupleur directionnel respectif,
où le premier coupleur directionnel et le troisième coupleur directionnel sont des coupleurs directionnels ayant une caractéristique de déphasage de 90 degrés,
et l'alimentation allouée au
deux extrémités est égale respectivement à la moitié de l'alimentation du signal d'entrée ; et le deuxième coupleur directionnel est un coupleur directionnel avec une division de d'alimentation inégale ayant une caractéristique de
déphasage
de 90 degrés, l'alimentation allouée à ses deux extrémités est respectivement un tiers et deux tiers de l'alimentation du signal d'entrée ;
les trois premiers coupleurs directionnels étant configurés de telle sorte que lorsqu'une extrémité d'entrée quelconque du premier, du deuxième ou du troisième coupleur directionnel est alimentée, la phase de transfert de l'extrémité de sortie de celui-ci sur le côté opposé est retardée de 90 degrés par rapport à celle de l'autre extrémité de sortie du même côté ;
un premier déphaseur fixe (4), un deuxième déphaseur fixe (5) et un troisième déphaseur fixe (6) ;
la matrice 3x3 de Butler possède trois ports d'entrée et trois ports de sortie, respectivement un
premier port d'entrée
(in1), un deuxième port d'entrée (in2), un troisième port d'entrée (in3), un premier port de sortie (out1), un deuxième port de sortie (out2) et un troisième port de sortie (out3) ;
la seconde extrémité d'entrée (2b) du second coupleur directionnel (2) est connectée au premier port d'entrée (in1), la seconde extrémité d'entrée (1b) du premier coupleur directionnel (1) est connectée au second port d'entrée (in2), la première extrémité d'entrée (1a) du premier coupleur directionnel (1) est connectée au troisième port d'entrée (in3), la première extrémité de sortie (1d) du premier coupleur directionnel (1) est connectée à la première extrémité d'entrée (3a) du troisième coupleur directionnel (3) via le premier déphaseur fixe (4), la deuxième extrémité de sortie (1c) du premier coupleur directionnel (1) est connectée à la première extrémité d'entrée (2a) du deuxième directionnel coupleur (2), la première extrémité de sortie (2d) du deuxième coupleur directionnel (2) est connectée à la deuxième extrémité d'entrée (3b) du troisième coupleur directionnel (3), la deuxième extrémité de sortie (2c) du deuxième le coupleur (2) est connecté au premier port de sortie (out1) via le troisième déphaseur fixe (6), la deuxième extrémité de sortie (3c) du troisième couplage directionnel (3) est connecté au deuxième port de sortie (out2) via le deuxième déphaseur fixe (5), la première extrémité de sortie (3d) du troisième coupleur directionnel (3) est connectée au troisième port de sortie (out3) ;
la phase de transfert du premier déphaseur fixe (4) est retardée de 90 degrés par rapport à celle
de la première extrémité d'entrée (2a) à la première extrémité de sortie (2d) du deuxième coupleur directionnel (2), la phase de transfert
du second déphaseur fixe (5) est retardée de 90° par rapport à celle
de l'extrémité de la première sortie
(3d) du troisième coupleur directionnel (3) au troisième port de sortie (out3), et la phase de transfert du troisième déphaseur fixe (6) est retardée de 90°
par rapport à celle de la première extrémité de sortie (2d) du
deuxième coupleur directionnel (2) au deuxième port de sortie (out2),
dans lequel les structures des trois premiers déphaseurs fixes comprennent deux lignes de transmissions 7/4 connectées en série et de la même impédance et une ligne de transmission de court-circuit Z / 4 ou une ligne de transmission de circuit ouvert Z / 2 connectée au point médian de ces deux lignes de transmission, et 7 est la fréquence centrale de la fréquence de travail du déphaseur fixe
La matrice de Butler 5x6 comprenant en outre un quatrième coupleur directionnel (11), un cinquième coupleur directionnel ((12), un diviseur
d'alimentation (13), un quatrième déphaseur fixe (16) et un cinquième déphaseur fixe (17),
dans lequel chacun des quatrième et cinquième coupleurs
directionnels (11, 12)
possède deux extrémités d'entrée et deux extrémités de sortie, respectivement une première extrémité d'entrée, une seconde extrémité d'entrée, une première extrémité de sortie et une seconde extrémité de sortie, le diviseur d'alimentation possède une extrémité d'entrée, une première extrémité de sortie et une seconde extrémité de sortie ;
la matrice de Butler 5x6 possède cinq ports d'entrée et six ports de sortie, respectivement les 5 premiers ports d'entrée
(in11, in12, in13, in14, in 15) et les 6 premiers ports de sortie (out11, out12, out13, out14, out15) ;
l'extrémité d'entrée (13a) du diviseur d'alimentation (13) est connectée au premier port d'entrée
(in11) I de la matrice de Butler 5x6,
la deuxième extrémité de sortie (13b) du diviseur d'alimentation (13) est connectée à la première extrémité d'entrée (15c) de la deuxième matrice de Butler 3x3 (15), la première extrémité de sortie (13c) du diviseur d'alimentation (13)) est connectée à la première extrémité d'entrée (14c) de la première matrice de Butler 3x3 (14), la deuxième extrémité d'entrée (12b) du cinquième coupleur directionnel (12) est connectée au deuxième port d'entrée (in12) de la matrice de Butler 5x6, la première extrémité d'entrée (12a) du cinquième coupleur directionnel (12) est connectée au troisième port d'entrée (in 13) de la matrice de Butler 5x6, la deuxième extrémité de sortie (12c) du cinquième coupleur directionnel (12) est connectée à la deuxième extrémité d'entrée (15b) de la deuxième matrice de Butler 3x3 (15), la première extrémité de sortie (12d) du cinquième coupleur directionnel (12) est connectée à la deuxième extrémité d'entrée (14b) de la première matrice de Butler 3x3 (14) via le cinquième déphaseur fixe (17), la deuxième extrémité d'entrée (11b) du quatrième coupleur directionnel
(11) est connecté au quatrième port d'entrée (in14) de la matrice de Butler 5x6, la première extrémité d'entrée (11a) du quatrième coupleur directionnel (11) est connectée au cinquième port d'entrée (in15) de la matrice de Butler 5x6, la deuxième extrémité de sortie (11c) du quatrième coupleur directionnel (11) est connectée à la troisième extrémité d'entrée (15a) de la deuxième matrice de Butler 3x3 (15), la première extrémité de sortie (11d) du quatrième coupleur directionnel (11) est connectée à la troisième extrémité d'entrée (14a) de la première matrice de Butler 3x3 (14) via le quatrième déphaseur fixe (16), la première extrémité de sortie (15d), la deuxième extrémité de sortie (15e) et la troisième extrémité de sortie (15f) de la deuxième matrice de Butler 3x3 (15) sont respectivement connectées au premier port de sortie (out11), au cinquième port de sortie (out15) et au troisième port de sortie (out13) de la matrice de Butler 5x6, la première extrémité de sortie (14d), la deuxième extrémité de sortie (14c) et la troisième extrémité de sortie (14f) de la première matrice de Butler 3x3 (14) sont respectivement connectées au deuxième port de sortie (out12), au sixième port de sortie (out16) et au quatrième port de sortie (out14) de la matrice de Butler 5x6 ; le quatrième déphaseur fixe (16) est un déphaseur avancé de 30°, et le cinquième déphaseur fixe (17) est un déphaseur avancé de 150°.

2. La matrice de Butler 5x6 selon la revendication 1, dans laquelle les premières extrémités d'entrée se termine et les
premières extrémités de sortie du quatrième coupleur directionnel (11) et du cinquième coupleur
directionnel (12) sont réparties
sur les mêmes premiers côtés du coupleur directionnel respectif,
et les secondes extrémités d'entrée et les secondes extrémités de sortie sont réparties sur les mêmes seconds côtés opposés aux premiers côtés du coupleur directionnel respectif ;
le quatrième coupleur directionnel (11) et le cinquième coupleur directionnel (12)
sont deux coupleurs directionnels
à division égale d'alimentation ayant une caractéristique de
déphasage de 90 degrés, l'alimentation attribuée à
ses deux extrémités de sortie sont égales respectivement à la moitié de l'alimentation du
signal d'entrée ; les quatrième et cinquième coupleurs directionnels étant configurés
de telle sorte que,
lorsqu'une extrémité d'entrée quelconque du quatrième ou cinquième coupleur directionnel est alimentée, la phase de transfert de l'extrémité de sortie de ce dernier sur le côté opposé est retardée de 90 degrés
par rapport à celle de l'autre extrémité de sortie
du même côté.

3. La matrice de Butler 5x6 selon la revendication 1, dans laquelle le quatrième coupleur directionnel (1) et le cinquième coupleur directionnel (12) sont des coupleurs de ligne de dérivation ou des coupleurs de ligne couplée.

4. La matrice de Butler 5x6 selon la revendication 1, dans laquelle le diviseur d'alimentation (13) est un diviseur d'alimentation à phase et à alimentation égales.

5. La matrice de Butler 5x6 selon la revendication 1, dans laquelle les trois premiers coupleurs directionnels et les trois premiers déphaseurs fixes des première et deuxième matrices de Butler 3x3
sont une structure à micro-bande ou à bande-ligne.

6. La matrice de Butler 5x6 selon la revendication 5, dans laquelle les troisièmes coupleurs directionnels des première et seconde matrices de Butler 3x3 sont des coupleurs de ligne de dérivation ou des coupleurs de ligne couplée.
